# EUROPEAN PATENT APPLICATION

(11) **EP 3 564 482 A2**
(43) Date of publication of application: **06.11.2019**
(21) Application number: 19167086.8
(22) Date of filing: 03.04.2019
(51) Int. Cl.: F01D 5/02, F01D 5/06, F02C 3/107, F02C 7/36

(54) **DRIVE SHAFT**

(30) Priority: 03.05.2018 GB 201807284
(71) Applicant: Rolls-Royce plc, London SW1E 6AT (GB)
(72) Inventor: Bentley, Martin, Derby, Derbyshire DE24 8BJ (GB); Chilton, Nicholas, Derby, Derbyshire DE24 8BJ (GB); Evans, Peter, Derby, Derbyshire DE24 8BJ (GB)
(74) Representative: Rolls-Royce plc

(57) **Abstract**

An apparatus comprising a shaft (110) for a gas turbine engine (10), the shaft comprising a shaft flange (116); a turbine rotor (130) for the gas turbine engine (10), the turbine rotor (130) comprising a turbine rotor flange (136) configured to couple to the shaft flange (116); and a stub shaft (120) comprising a stub shaft flange (126) configured to couple to the shaft flange (116), wherein the stub shaft (120) is concentric with the shaft (110) and configured to have a first interference fit around a portion of the turbine rotor (130).

## Description

### Field of the Disclosure

The present disclosure relates to a drive shaft, and more particularly to a coupling between a turbine rotor and a shaft of a gas turbine engine.

### Background of the Related Art

In a gas turbine engine, a turbine that is downstream of a combustor extracts mechanical work from fluid from the combustor. The turbine is mechanically coupled to a compressor that is upstream of the combustor by a core shaft, so that the turbine drives the compressor. Considerable torque may be imparted through the core shaft. The turbine comprises at least one rotor that is mechanically coupled to the core shaft.

In existing engines, a turbine rotor may be coupled to the core shaft using bolts. The bolts impart a pre-load between the core shaft and rotor at an interface between the core shaft and rotor so that frictional coupling at the interface can transmit torque from the rotor to the core shaft. In some circumstances, the frictional coupling may not be sufficient to transmit the torque. Under these circumstances the bolts may take some of the torque load, and be loaded in shear.

In some existing engines, a turbine rotor is coupled to a core shaft using taper bolts. Taper bolts enable precise radial location of the rotor on the core shaft and are suitable for transmitting large amounts of torque between the rotor and core shaft, because there is no clearance between the taper bolt and either of the core shaft or the rotor.

Taper bolts require specialist equipment to ream corresponding taper holes in each of the rotor and core shaft. The taper reaming process is time consuming, and can result in additional costs over the lifecycle of the engine. For example, wear between the taper bolts and the taper holes can necessitate re-reaming of the holes to a larger diameter, and the use of slightly larger diameter taper bolts.

United Kingdom patent specifications GB 781478 and GB 595669 disclose examples of prior art gas turbines in which a rotor is coupled to a core shaft.

### SUMMARY

According to a first aspect, there is provided an apparatus comprising: a shaft for a gas turbine engine, the shaft comprising a shaft flange; a turbine rotor for the gas turbine engine, the turbine rotor comprising a turbine rotor flange configured to couple to the shaft flange; and a stub shaft comprising a stub shaft flange configured to couple to the shaft flange, wherein the stub shaft is concentric with the shaft and configured to have a first interference fit around a portion of the turbine rotor.

The stub shaft may be configured to have a second interference fit around the shaft.

The stub shaft flange may comprise an axial protrusion with a first surface facing radially inward. The turbine rotor may comprise a shoulder with a second surface facing radially outward. The first interference fit may be between the first surface and the second surface.

The shaft may comprise a radial protrusion having a third surface. The third surface may face radially outward. The stub shaft may comprise a fourth surface. The fourth surface may face radially inward. The second interference fit may be between the third surface and the fourth surface.

The stub shaft may comprise a radial protrusion having a fourth surface. The fourth surface may face radially inward. The shaft may comprise a third surface. The third surface may face radially outward. The second interference fit may be between the third surface and the fourth surface.

Both the first and second interference fits may be provided between surfaces of the stub shaft that face radially inward and a respective surface of the shaft and rotor that faces radially outwards.

The first interference fit may radially locate the turbine rotor on the stub shaft.

Each of the shaft flange, turbine rotor flange and stub shaft flange may be provided with a plurality of holes on a common bolt circle. Each hole may be configured to receive a bolt that passes through each of the shaft flange, turbine rotor flange and stub shaft flange.

Each of the holes may have parallel walls. Each of the holes may not be taper reamed.

The apparatus may further comprise a bolt for each of the holes in the shaft flange. Each of the bolts may be configured to have a clearance fit (e.g. not a taper fit) in the corresponding hole of each of the shaft flange, turbine rotor flange and stub shaft flange.

The stub shaft may comprise a bearing surface configured to be received in a bearing.

The stub shaft may comprise sealing protrusions for forming a seal between the stub shaft and a stationary further seal element.

At least one of the sealing protrusions may be provided at an axial location that is between the axial location of the stub shaft flange and the axial location of a (or the) bearing surface configured to be received in a bearing.

At least one of the sealing protrusions may be provided facing radially outward from an axial protrusion extending from the stub shaft flange.

The turbine rotor flange may be configured to be received between the shaft flange and the stub shaft flange.

According to a second aspect, there is provided a gas turbine engine for an aircraft comprising:
an engine core comprising a turbine, a compressor, and a core shaft connecting the turbine to the compressor;
a fan located upstream of the engine core, the fan comprising a plurality of fan blades;
a gearbox that receives an input from the core shaft and outputs drive to the fan so as to drive the fan at a lower rotational speed than the core shaft; and
an apparatus according to the first aspect, wherein the shaft of the apparatus is the core shaft.

According to a third aspect, there is provided a gas turbine engine for an aircraft comprising:
an engine core comprising a first turbine, a first compressor, and a first core shaft connecting the first turbine to the first compressor;
a fan located upstream of the engine core, the fan comprising a plurality of fan blades;
a gearbox that receives an input from the first core shaft and outputs drive to the fan so as to drive the fan at a lower rotational speed than the first core shaft;
a second turbine, a second compressor, and a second core shaft connecting the second turbine to the second compressor; the second turbine, second compressor, and second core shaft arranged to rotate at a higher rotational speed than the first core shaft; and
an apparatus according to the first aspect, wherein the shaft of the apparatus is the first core shaft or the second core shaft.

The apparatus may be a first apparatus, and the engine may further comprise a second apparatus according to the first aspect, wherein the shaft of the first apparatus is the first core shaft, and the shaft of the second apparatus is the second core shaft.

According to a fourth aspect, there is provided a method of coupling a turbine rotor to a stub shaft, the method comprising the steps of:
causing a temperature difference between the stub shaft and the turbine rotor thereby causing the stub shaft to expand relative to the turbine rotor so that there is a clearance fit between the stub shaft and the turbine rotor;
fitting the turbine rotor to the stub shaft; and
reducing the temperature difference between the stub shaft and the turbine rotor to cause a first interference fit between the stub shaft and the turbine rotor.

The method may further comprise coupling the stub shaft to a shaft, by:
causing a temperature difference between the stub shaft and shaft thereby causing the stub shaft to expand relative to the shaft so that there is a clearance fit between the stub shaft and the shaft;
fitting the stub shaft to the shaft; and
reducing the temperature difference between the stub shaft and the shaft to cause a second interference fit between the stub shaft and the shaft.

The method may comprise causing a temperature difference between the stub shaft and both of the shaft and the turbine rotor at the same time, so as to cause a clearance fit between the stub shaft and each of the shaft and the turbine rotor at the same time.

The fitting of the stub shaft to the shaft may be at the same time as the fitting of the stub shaft to the turbine rotor.

The temperature difference may be caused by applying heat to the stub shaft, to cause the temperature of the stub shaft to increase relative to the turbine rotor and/or the shaft. Alternatively (or in addition) at least one of the turbine rotor and the shaft may be cooled.

The method may be performed using an apparatus according to any other aspect.

The features of each aspect may be combined with those of any other aspect, including any of the optional features thereof. The features of each aspect may be combined with any of the features mentioned below with reference to a gas turbine engine.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case. The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION OF THE DRAWINGS

Embodiments will now be described by way of example only, with reference to the Figures, in which:
**Figure 1** is a sectional side view of a gas turbine engine;
**Figure 2** is a close up sectional side view of an upstream portion of a gas turbine engine;
**Figure 3** is a partially cut-away view of a gearbox for a gas turbine engine;
**Figure 4** is a sectional view of a coupling between a core shaft and a turbine rotor, not in accordance with an embodiment; and,
**Figure 5** is a sectional view of an example embodiment.

### DETAILED DESCRIPTION OF THE DISCLOSURE

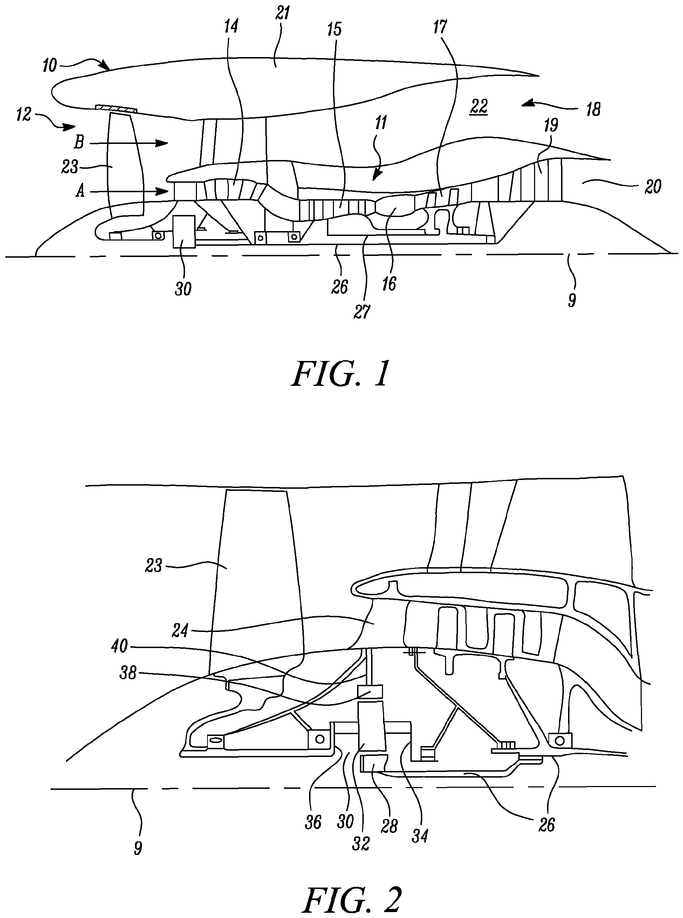

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

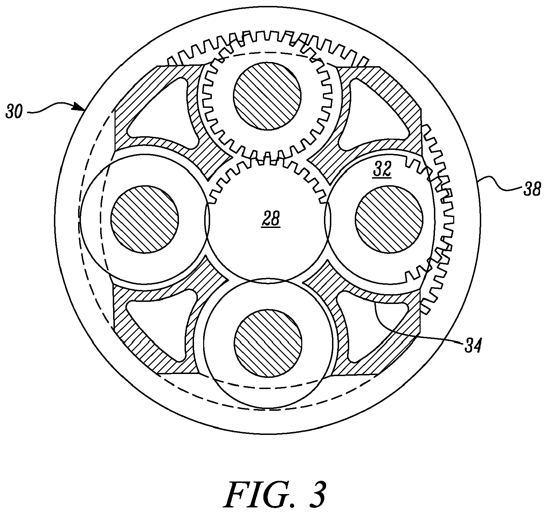

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

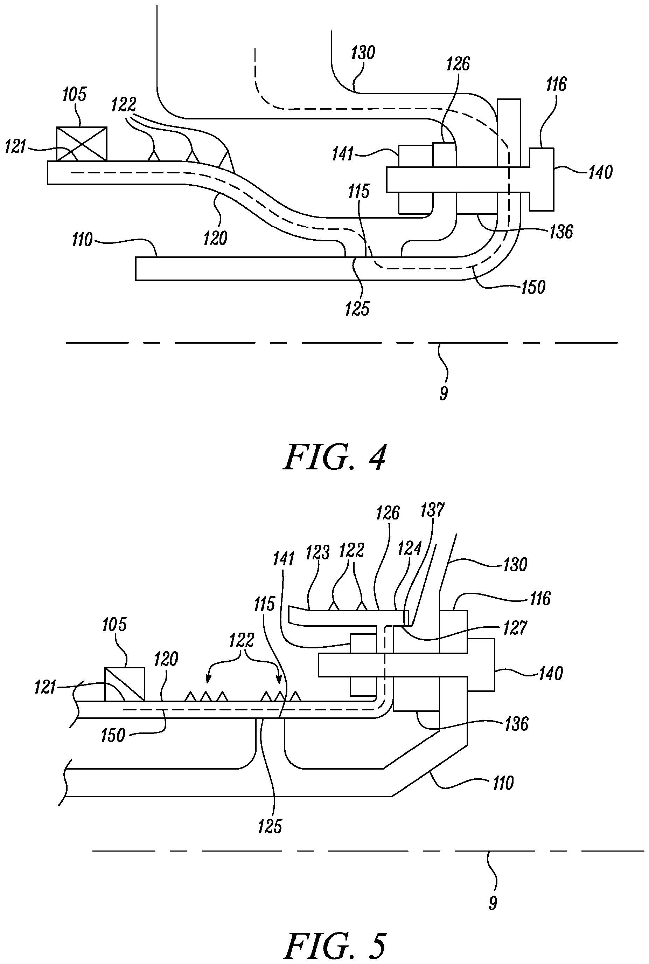

Referring to Figure 4, a sectional view of a coupling not in accordance with an embodiment is shown, comprising a turbine rotor 130, a shaft 110, and a stub shaft 120.

The turbine rotor 130 comprises blades that derive power from the core fluid flow, which comprises combustion products and core air B. The blades are radially outward from the coupling area that is shown in Figure 4, and therefore not visible in Figure 4.

The turbine rotor 130 comprises a rotor flange 136 that includes a plurality of holes on a common bolt circle about the rotational axis 9 (the sectional view being of a plane including axis of one of these holes and the rotational axis 9).

The shaft 110 includes a shaft flange 116 that includes a plurality of holes on the common bolt circle, each of which lines up with a corresponding hole on the rotor flange 136.

The stub shaft 120 comprises a stub shaft flange 126 that includes a plurality of holes on the common bolt circle, each of which lines up with a corresponding hole on the rotor flange 136. The stub shaft 120 further comprises a bearing surface 121, supported by a bearing 105 in contact therewith.

A bolt 140 is provided for each of the holes in the shaft flange 116. The bolt 140 is a taper bolt, and each of the holes in in the shaft flange 116 and the turbine rotor flange 136 have a corresponding taper, so that each bolt 140 forms a precision taper fit with each of the tapering holes in the shaft flange and turbine rotor flange 136. The bolt 140 has a clearance fit with the hole in the stub shaft flange 126. A nut 141 is provided adjacent to the stub shaft flange 126.

A load path 150 illustrates the path of radial loads from the rotor 130 to the bearing 105. The tolerance of this load path 150 is dependent on the fit of the taper bolts 140 with the rotor flange 136 and shaft flange 116, and on the fit between the shaft 110 and the stub shaft (between surfaces 125 and 115).

Figure 5 shows a sectional view of an apparatus according to an embodiment of the present disclosure. The apparatus comprises a turbine rotor 130, stub shaft 120 and shaft 110.

The turbine rotor 130 comprises blades that derive power from the core fluid flow, which comprises combustion products and core air B. The blades are radially outward from the coupling area that is shown in Figure 5, and therefore not visible in Figure 5.

The turbine rotor 130 comprises a rotor flange 136 that includes a plurality of holes on a common bolt circle about the rotational axis 9 (the sectional view being of a plane including axis of one of these holes and the rotational axis 9).

The shaft 110 includes a shaft flange 116 that includes a plurality of holes on the common bolt circle, each of which lines up with a corresponding hole on the rotor flange 136.

The stub shaft 120 comprises a stub shaft flange 126 that includes a plurality of holes on the common bolt circle, each of which lines up with a corresponding hole on the rotor flange 136. The stub shaft 120 further comprises a bearing surface 121 supported by a bearing 105 in contact therewith.

A bolt 140 is provided for each of the holes in the shaft flange 116. In contrast to the arrangement of figure 4, the bolt 140 is not required to be a taper bolt, and may be a conventional cylindrical bolt configured for a clearance fit with each of the holes in the shaft flange 116, rotor flange 136 and stub shaft flange 126. A nut 141 is provided adjacent to the stub shaft flange 126. The stub shaft flange 126 may be configured to prevent rotation of the nut 141, so that the bolt 140 may be tightened without access to the nut 141.

In embodiments, the stub shaft 120 is configured to have an interference fit with the rotor 130. This simplifies the load path for reacting lateral forces from the rotor 130. In some embodiments and may obviate the need for taper bolts. The tolerance stack-up of the load path 150 (from the rotor 130 to the bearing 105) may be simplified because fewer tolerances are involved, and the through life costs may be reduced by the elimination of taper bolts. The interference fit between the rotor 130 and the stub shaft 120 enables loads to be transmitted directly from the rotor 130 to the stub shaft 120, and thence to the bearing that supports the stub shaft 120 The interference fit between the rotor 130 and the stub shaft 120 may also carry torque,. The torque is carried by the friction between the rotor flange 136 and shaft flange 116 caused by the pre-load arising from tension in the bolts 140.

The use of an interference fit between the stub shaft 120 and the rotor 130 may be particularly useful in the context of a gas turbine engine comprising a gearbox that receives an input from a core shaft and outputs drive to a fan, so as to drive the fan at a lower speed than the core shaft. In such engines it is advantageous for the core shaft to be relatively long, which causes problems in achieving taper reaming operations because very long shafts are typically difficult to accommodate in existing machine tools for taper reaming operations. The interference fit between the stub shaft 120 and the rotor 130 enables a long core shaft to be used.

In order to provide the first interference fit, between the stub shaft 120 and the rotor 130, in the example embodiment the stub shaft flange 126 is provided with an axial protrusion 124 (or first spigot) extending from the stub flange 126 in the direction of the rotor flange 136. The axial protrusion 124 defines a first surface 127, which is substantially cylindrical and faces radially inward. The rotor flange 136 comprises a shoulder with a second, corresponding second surface 137, facing radially outwards. The first surface 127 is configured to be an interference fit with the second surface 137, so that the axial protrusion 124 of the stub shaft 120 grips the shoulder of the rotor 130.

In this embodiment, a second interference fit is provided between the stub shaft 120 and the shaft 110. In this embodiment this second fit is at an outward radial protrusion from the shaft 110 (with the stub shaft 120 defining a second spigot over this protrusion). The radial protrusion ends in a third surface 115, facing radially outward. The stub shaft 120 comprises a corresponding fourth surface 125, facing radially inward, which is configured to be an interference fit with the third surface 115. It will be understood that the second interference fit may be at a protrusion facing radially inward from the stub shaft instead of, or in addition to any radial protrusion from the shaft 110. In some embodiments the second interference fit is not associated with any protrusions (from either the shaft 110 or stub shaft 120).

Both the first and second interference fits are provided between surfaces 125, 127 of the stub shaft 120 that face radially inward and a respective surface 115, 137 of the shaft 110 and rotor 130 that faces radially outwards. This enables the stub shaft 120 to be shrink fitted to both the shaft 110 and rotor 130, by heating the stub shaft 120 relative to the shaft 110 and rotor 130 (and/or cooling the shaft 110 and rotor 130 relative to the stub shaft 120).

A load path 150 illustrates the path of transverse loads from the rotor 130 to the bearing 105. The tolerance of this load path 150 is dependent only on the first interference fit (between the rotor 130 and stub shaft 110). This is a simpler and more controllable tolerance stack than in the arrangement of figure 4.

The stub shaft 120 may be provided with sealing protrusions 122. In the example embodiment, the stub shaft 120 comprises a further axial protrusion 123 from the stub shaft flange 126, extending in the opposite direction to the protrusion 124. At least one sealing protrusion may be provided on the further axial protrusion (the sealing protrusions facing radially outward). The sealing protrusions may be configured to form a labyrinth seal with a corresponding stationary part of the engine. Further sealing protrusions 122 may be provided on other portions of the stub shaft, for example between the bearing surface 121 and the stub shaft flange 126.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. An apparatus comprising:
a shaft (110) for a gas turbine engine (10), the shaft comprising a shaft flange (116);
a turbine rotor (130) for the gas turbine engine (10), the turbine rotor (130) comprising a turbine rotor flange (136) configured to couple to the shaft flange (116); and,
a stub shaft (120) comprising a stub shaft flange (126) configured to couple to the shaft flange (116), wherein the stub shaft (120) is configured to be concentric with the shaft (110) and to have a first interference fit around a portion of the turbine rotor (130).

2. The apparatus as claimed in claim 1, wherein the stub shaft flange (126) comprises an axial protrusion (124) with a first surface (127) facing radially inward, and the turbine rotor (130) comprises a shoulder with a second surface (137) facing radially outward, and the first interference fit is between the first surface (127) and the second surface (137).

3. The apparatus as claimed in claim 1 or 2, wherein the stub shaft (120) is configured to have a second interference fit around the shaft (110).

4. The apparatus as claimed in claim 3, wherein the shaft (110) comprises a radial protrusion having a third surface (115), facing radially outward, and the stub shaft (120) comprises a fourth surface (125), facing radially inward, and the second interference fit is between the third surface (115) and the fourth surface (125).

5. The apparatus as claimed in claim 3, wherein the stub shaft (120) comprises a radial protrusion having a fourth surface (125) facing radially inward, and the shaft (110) comprises a third surface (115) facing radially outward, and the second interference fit is between the third surface (115) and the fourth surface (125).

6. The apparatus as claimed in any one of claims 3 to 5, wherein both the first and second interference fits are provided between surfaces (125, 127) of the stub shaft (120) that face radially inward and a respective surface (115, 137) of the shaft (110) and rotor (130) that faces radially outwards.

7. The apparatus as claimed in any preceding claim, wherein the first interference fit radially locates the turbine rotor (130) on the stub shaft (120).

8. The apparatus as claimed in any preceding claim, wherein each of the shaft flange (116), turbine rotor flange (136) and stub shaft flange (126) are provided with a plurality of holes on a common bolt circle, each hole configured to receive a bolt (140) that passes through each of the shaft flange (116), turbine rotor flange (136) and stub shaft flange (126).

9. The apparatus as claimed in claim 8, wherein each of the holes have parallel walls.

10. The apparatus as claimed in claim 8 or 9, further comprising a bolt (140) for each of the holes in the shaft flange (116), wherein each bolt (140) is configured to have a clearance fit in the corresponding hole of each of the shaft flange (116), turbine rotor flange (136) and stub shaft flange (126).

11. The apparatus as claimed in any preceding claim, wherein the stub shaft (120) comprises a bearing surface configured to be received in a bearing (105).

12. The apparatus as claimed in any preceding claim, wherein the stub shaft (120) comprises sealing protrusions for forming a seal (122) between the stub shaft (120) and a stationary further seal element, wherein at least one of the sealing protrusions (122) is provided from an axial protrusion (123) extending from the stub shaft flange (126).

13. The apparatus as claimed in any preceding claim, wherein the turbine rotor flange (136) is configured to be received between the shaft flange (116) and the stub shaft flange (126).

14. A method of coupling a turbine rotor (130) to a stub shaft (120), the method comprising the steps of:
causing a temperature difference between the stub shaft (120) and the turbine rotor (130) thereby causing the stub shaft (120) to expand relative to the turbine rotor (130) so that there is a clearance fit between the stub shaft (120) and the turbine rotor (130);
fitting the turbine rotor (130) to the stub shaft (120); and
reducing the temperature difference between the stub shaft (120) and the turbine rotor (130) to cause a first interference fit between the stub shaft (120) and the turbine rotor (130).

15. The method as claimed in claim 14, further comprising coupling the stub shaft (120) to a shaft (110), by:
causing a temperature difference between the stub shaft (120) and shaft (110) thereby causing the stub shaft (120) to expand relative to the shaft (110) so that there is a clearance fit between the stub shaft (120) and the shaft (110);
fitting the stub shaft (120) to the shaft (110); and
reducing the temperature difference between the stub shaft (120) and the shaft (110) to cause a second interference fit between the stub shaft (120) and the shaft (110).
